# EUROPÄISCHE PATENTANMELDUNG

(11) **EP 3 476 214 A1**
(43) Veröffentlichungstag der Anmeldung: **01.05.2019**
(21) Anmeldenummer: 17198647.4
(22) Anmeldetag: 26.10.2017
(51) Int. Cl.: A01K 43/00

(54) **EIERREINIGUNGSVORRICHTUNG SOWIE VERFAHREN ZUR REINIGUNG VON EIERN**

(71) Anmelder: Ramer, Meinrad, 8881 Tscherlach (CH); Schelbert, Johan, 8880 Walenstadt (CH)
(72) Erfinder: Ramer, Meinrad, 8881 Tscherlach (CH); Schelbert, Johan, 8880 Walenstadt (CH)
(74) Vertreter: Dr. Graf & Partner AG

(57) **Zusammenfassung**

Die Eierreinigungsvorrichtung (1) umfasst eine rotierbare Bürste (2) sowie eine rotierbare Förderschnecke (3) mit einer Förderschneckenwelle (3a) und einem Schneckengewinde (3b), wobei die Bürste (2) und die Förderschnecke (3) in einer axialen Richtung (A) im Wesentlichen horizontal und gegenseitig parallel verlaufend angeordnet sind, wobei das Schneckengewinde (3b), bedingt durch dessen Steigung (3c), in axialer Richtung (A) einen ein Ei aufnehmenden Zwischenraum (3d) ausbildet, wobei die Bürste (2) und die Förderschneckenwelle (3a) einen sich nach unten verjüngenden, das Ei auffangenden Führungsspalt (4) ausbilden.

## Beschreibung

Die Erfindung betrifft eine Eierreinigungsvorrichtung. Die Erfindung betrifft weiter ein Verfahren zur Reinigung von Eiern.

### Stand der Technik

Das Dokument US 269576 offenbart eine Eierreinigungsvorrichtung zum Reinigen der äusseren Oberfläche von Eiern mit Hilfe einer Flüssigkeit. Diese Eierreinigungsvorrichtung umfasst zwei rotierende Bürsten, welche das Ei tragen sowie dessen Oberfläche befeuchten und reinigen, und umfasst eine Förderschnecke, welche das Ei entlang der rotierenden Bürsten bewegt. Solche gewaschene Eier weisen den Nachteil auf, dass die Eier relativ schnell schlecht und ungeniessbar werden, da durch das Waschen der Eier Poren in deren Schale geöffnet werden, durch welche Erreger in das Ei eindringen können. Wird diese bekannte Eierreinigungsvorrichtung ohne Flüssigkeit betrieben, so lassen sich die Eier nicht mehr befriedigend reinigen.

### Darstellung der Erfindung

Aufgabe der Erfindung ist es eine Eierreinigungsvorrichtung zu bilden, welche Eier ohne Verwendung einer Flüssigkeit zuverlässig reinigt.

Diese Aufgabe wird gelöst mit einer Eierreinigungsvorrichtung aufweisend die Merkmale von Anspruch 1. Die abhängigen Ansprüche 2 bis 13 betreffen weitere vorteilhafte Ausgestaltungen. Die Aufgabe wird weiter gelöst mit einem Verfahren zum Reinigen von Eiern aufweisend die Merkmale von Anspruch 14. Der abhängige Anspruch 15 betrifft einen weiteren vorteilhaften Verfahrensschritt.

Die Aufgabe wird insbesondere gelöst mit einer Eierreinigungsvorrichtung umfassend eine rotierbare Bürste sowie eine rotierbare Förderschnecke mit einer Förderschneckenwelle und einem Schneckengewinde, wobei die Bürste und die Förderschnecke in einer axialen Richtung im Wesentlichen horizontal und gegenseitig parallel verlaufend angeordnet sind, wobei das Schneckengewinde, bedingt durch dessen Steigung, in axialer Richtung einen ein Ei aufnehmenden Zwischenraum ausbildet, wobei die Bürste und die Förderschneckenwelle einen sich nach unten verjüngenden, das Ei auffangenden Führungsspalt ausbilden.

Die Aufgabe wird zudem insbesondere gelöst mit einem Verfahren zum Reinigen der Oberfläche einer Mehrzahl von Eiern mit einer rotierenden Bürste und mit einer rotierenden Förderschnecke, wobei die Förderschnecke ein Schneckengewinde bestehend aus Langborsten aufweist, und wobei die Bürste und die Förderschnecke in einer axialen Richtung, unter Ausbildung eines Führungsspaltes, im Wesentlichen horizontal und gegenseitig parallel verlaufen um die Eier zu tragen, indem die Eier durch die Langborsten in axialer Richtung entlang der rotierenden Bürste verschoben werden, wobei durch das Schneckengewinde in axialer Richtung eine Mehrzahl von Zwischenräumen ausgebildet werden, und wobei in jedem Zwischenraum höchstens ein einziges Ei gefördert wird.

Das Schneckengewinde, welches in axialer Richtung eine Mehrzahl von je ein Ei aufnehmenden Zwischenräumen ausbildet, ermöglicht, dass die Eier besonders schonend entlang der Bürste gefördert und dabei gereinigt werden. Vorteilhafterweise besteht das Schneckengewinde zumindest teilweise und vorzugsweise vollständig aus radial vorstehenden Langborsten, welche vorzugsweise elastisch ausgestaltet sind und vorzugsweise aus einem Kunststoff wie Nylon bestehen. Ein solches, elastisches Schneckengewinde erlaubt ein besonders schonendes Fördern der Eier, was die Gefahr eines Bruchs einer Eierschale erheblich reduziert. Vorteilhafterweise ist in jedem der Zwischenräume ein einziges Ei angeordnet, was einen Eierbruch zusätzlich reduziert. Vorteilhafterweise weist die Förderschnecke zudem vorstehende Kurzborsten auf, welche ebenfalls reinigend auf das Ei wirken. Vorteilhafterweise ist jeder Zwischenraum derart dimensioniert, dass sich ein darin befindliches Ei frei in alle Richtungen drehen kann, sodass während dem Reinigen sowohl die rotierende Bürste als auch die Kurzborsten und die Langborsten der Förderschneckenwelle auf die Oberfläche des Eis einwirken, wobei sich das Ei während des Reinigens im Zwischenraum ständig dreht, sodass die Oberfläche des Eis an möglichst vielen Stellen mit der Reinigungsvorrichtung in Kontakt kommt und dabei gereinigt wird. Die erfindungsgemässe Eierreinigungsvorrichtung weist den Vorteil auf, dass Eier ohne die Verwendung einer Flüssigkeit wie Wasser umfassend gereinigt werden können, und dass die Eier während des Reinigens nicht oder nur äusserst selten beschädigt werden. Die erfindungsgemässe Eierreinigungsvorrichtung erlaubt somit ein gründliches, zuverlässiges, effizientes und kostengünstiges Reinigen von Eiern. Die erfindungsgemässe Eierreinigungsvorrichtung weist zudem den Vorteil auf, dass derart gereinigte Eier einen höheren Marktpreis erzielen.

Die Erfindung wird nachfolgend im Detail beschrieben.

### Kurze Beschreibung der Zeichnungen

Die zur Erläuterung der Ausführungsbeispiele verwendeten Zeichnungen zeigen:
- Fig. 1: eine Seitenansicht eines ersten Ausführungsbeispiels einer Eierreinigungsvorrich tung;
- Fig. 2: eine Draufsicht der Eierreinigungsvorrichtung gemäss Fig. 1;
- Fig. 3: eine Detailansicht der Draufsicht gemäss Fig. 2;
- Fig. 4: eine Seitenansicht eines weiteren Ausführungsbeispiels einer Eierreinigungsvorrich tung;
- Fig. 5: eine Detailansicht der Eierreinigungsvorrichtung gemäss Fig. 4 aus Blickrichtung B;
- Fig. 6: eine perspektivische Ansicht eines weiteren Ausführungsbeispiels einer Eierreinigungsvorrichtung;
- Fig. 7: eine Draufsicht auf die Eierreinigungsvorrichtung gemäss Fig. 6 mit darin angeordneten Eiern.

Grundsätzlich sind in den Zeichnungen gleiche Teile mit gleichen Bezugszeichen versehen.

### Wege zur Ausführung der Erfindung

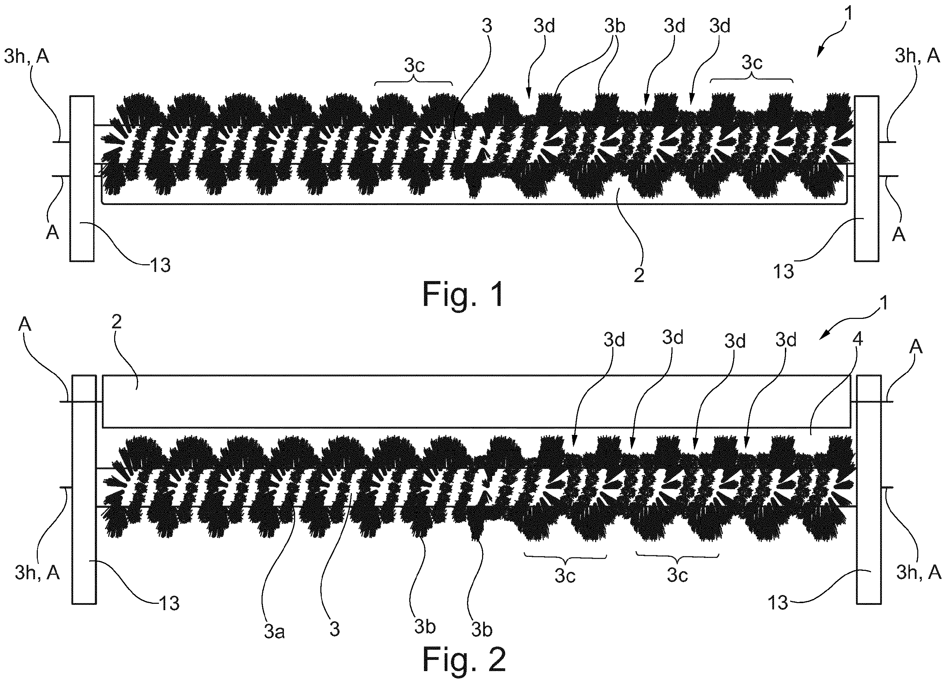

Fig. 1 zeigt in einer Seitenansicht und Fig. 2 in einer Draufsicht ein erstes Ausführungsbeispiel einer Eierreinigungsvorrichtung 1 umfassend eine rotierbare Bürste 2 sowie eine rotierbare Förderschnecke 3, welche beide in einer axialen Richtung A im Wesentlichen horizontal und gegenseitig parallel verlaufend angeordnet sind. Die Förderschnecke 3 umfasst eine Förderschneckenwelle 3a mit einer Drehachse 3h. Die Fördererschnecke 3 umfasst zudem ein in radialer Richtung über die Förderschneckenwelle 3a vorstehendes Schneckengewinde 3b, dass in Verlaufsrichtung der Drehachse 3h eine Steigung 3c aufweist. Die Steigung 3c ist derart gewählt, dass das Schneckengewinde 3b in Verlaufsrichtung der Drehachse 3h eine Mehrzahl von Zwischenräumen 3d ausbildet, welche derart lang ist, das im Zwischenraum 3d in Verlaufsrichtung der Drehachse 3h ein Ei, vorzugsweise ein Hühnerei Platz findet.

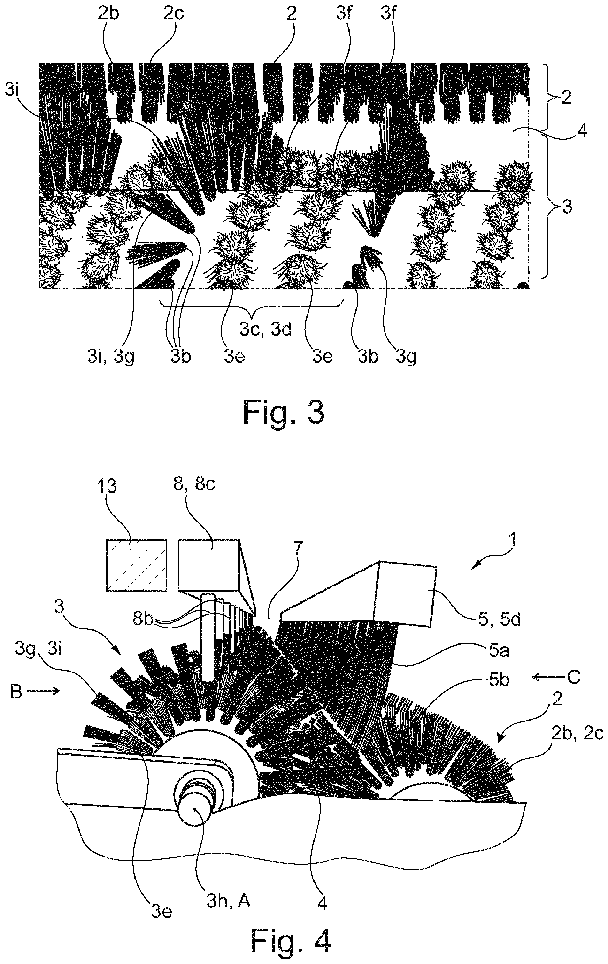

Wie aus Fig. 2 und der Detailansicht gemäss Fig. 3 ersichtlich, ist die Bürste 2 neben der Förderschnecke 3 angeordnet, wobei sich zwischen der Bürste 2 und der Förderschnecke 3 ein in axialer Richtung A verlaufender, nach unten offener Führungsspalt 4 ergibt, durch den Schmutzteile nach unten fallen können. Die Bürste 2 und die Förderschneckenwelle 3a bilden durch ihre runde Form einen sich nach unten verjüngenden, das Ei auffangenden Führungsspalt 4 aus, sodass das Ei nicht durch den Führungsspalt 4 fallen kann, wobei sich der Führungspalt 4 nach der schmalsten Stelle gegen unten wieder erweitert. Die Bürste 2 ist vorteilhafter Weise als Rundbürste ausgestaltet, und umfasst vorteilhafter Weise eine Vielzahl von Büscheln 2c bestehend jeweils aus einer Mehrzahl von in radialer Richtung vorstehenden Bürstenborsten 2b, wobei eine Vielzahl von Büscheln 2c in Umfangsrichtung sowie in axialer Richtung A beabstandet angeordnet sind, sodass das Ende der Bürstenborsten 2b die Oberfläche der Rundbürste ausbilden. Das Schneckengewinde 3b weist eine Steigung 3c auf, sodass sich eine Mehrzahl von Zwischenräumen 3d ergeben, in welchen jeweils ein Ei Platz finden kann, wobei das Ei in axialer Richtung A durch das den Zwischenraum 3d begrenzende Schneckengewinde 3b seitlich geführt ist und in axialer Richtung A zum Auslass 10 hin bewegt wird. Das Schneckengewinde 3b könnte aus einem festen Material wie beispielsweise einem Metall oder Kunststoff bestehen, und beispielsweise wandförmig ausgestaltet sein, unter Ausbildung einer Zwischenwand zwischen den Zwischenräumen 3d. Das Metall könnte vorzugsweise zudem eine raue Oberfläche aufweisen. Besonders bevorzugt besteht das Schneckengewinde 3b, wie in den Figuren 1 bis 3 dargestellt, aus einer Vielzahl von Langborsten3g, welche über die Oberfläche der Förderschneckenwelle 3a vorstehen, und welche derart verlaufen, dass diese das Schneckengewinde 3b ausbilden. Vorzugsweise ist eine Mehrzahl von Langborsten 3g jeweils zu einem Langborstenbüschel 3i zusammengefasst, wobei eine Vielzahl derartiger Langborstenbüschel 3i an der Förderschneckenwelle 3a befestigt sind, und gewindeförmig entlang dieser verlaufen. Das aus Langborsten 3g bestehende Schneckengewinde 3b weist vorteilhafterweise flexible Eigenschaften auf, um ein an des Schneckengewinde 3b stossende Ei elastisch abzubremsen. In einer vorteilhaften Ausgestaltung bestehen die Langborsten 3g aus einem Kunststoffmaterial wie Nylon. In einer möglichen Ausgestaltung begrenzt die Oberfläche der Förderschneckenwelle 3a den Zwischenraum 3d zur Drehachse 3h der Förderschnecke 3 hin. In einer vorteilhaften Ausgestaltung weist diese Oberfläche elastische Eigenschaften auf, um einen Stoss eines auf diese Oberfläche auftreffenden Eies abzufedern. In einer besonders vorteilhaften Ausgestaltung sind an der Oberfläche der Förderschneckenwelle 3a, wie in Figur 3 dargestellt, in radialer Richtung vorstehende Kurzborsten 3e angeordnet, deren Spitzen im Wesentlichen den für das Ei tiefsten Punkt des Zwischenraumes 3d definieren. Vorteilhafterweise überragen die Langborsten 3g die Kurzborsten3e in radialer Richtung um einen Faktor 2 bis 20, damit die Langborsten 3g in axialer Richtung A einen definierten Zwischenraum 3d ausbilden. Die Länge der Langborsten 3g entspricht vorzugsweise zumindest dem Durchmesser der zu reinigenden Eier, und ist vorzugsweise noch Länger, damit die Eier die Langborsten 3g nicht überspringen können. Eine Mehrzahl von Kurzborsten 3e sind vorzugsweise als Kurzborstenbüschel zusammengefasst. Die Kurzborsten 3e bzw. die Kurzborstenbüschel verlaufen vorzugsweise, wie in Fig. 3 dargestellt, entlang einer Borstenlinie 3f, parallel zum Schneckengewinde 3b, und somit schraubenförmig entlang der Förderschneckenwelle 3a. In einer vorteilhaften Ausgestaltung sind, wie in Figur 3 dargestellt, im Zwischenraum 3d zwei Borstenlinien 3f angeordnet, wobei die Borstenlinien 3f sowie die Langborsten 3g in axialer Richtung A vorzugsweise gegenseitig gleichmässig beanstandet sind. Besonders vorteilhaft weisen die Kurzborsten 3e einen dünneren Querschnitt auf als die Langborsten 3g, beispielsweise einen um den Faktor 5 bis 20 dünneren Querschnitt, einerseits um die Elastizität des Kurzborstenbüschels in radialer Richtung zu erhöhen, und um andererseits eine feinere Reinigungsstruktur auszubilden, mit welcher die Oberfläche eines Eis gereinigt wird. Dies ermöglicht ein besonders schonendes und gründliches Reinigen der Oberfläche des Eis.

Die erfindungsgemässe Vorrichtung ist besonders vorteilhaft zur Reinigung von Hühnereiern geeignet, wobei sie auch zur Reinigung von andern Vogeleiern geeignet ist, insbesondere auch grösseren oder kleineren Eiern. Ein Hühnerei weist vorzugsweise einen Durchmesser zwischen 40 und 50 mm auf. In einer vorteilhaften Ausgestaltung weist der Zwischenraum 3d somit in axialer Richtung A einen Abstand von zumindest 50 mm auf, um das Ei im Zwischenraum 3d zu halten. Ein Hühnerei weist vorzugsweise eine Länge zwischen 50 und 100 mm auf. In einer weiteren vorteilhaften Ausgestaltung weist der Zwischenraum 3d somit in axialer Richtung A einen Abstand von zumindest 100 mm auf, um das Ei im Zwischenraum 3d zu halten, und um ein Drehen eines Eis um all dessen Achsen zu ermögliche, sodass möglichst die gesamte Oberfläche des Eis mit den Kurzborsten 3e und/oder der Oberfläche der rotierenden Bürste 2 in Kontakt kommt, sodass die Oberfläche des Eis möglichst vollständig und vorzugsweise auch gleichmässig gereinigt wird.

Fig. 4 zeigt in einer Seitenansicht ein weiteres Ausführungsbeispiel einer Eierreinigungsvorrichtung 1. Die rotierbare Bürste 2 sowie die rotierbare Förderschnecke 3 sind wie in den Figuren 1-3 dargestellt angeordnet, unter Ausbildung eines Führungsspaltes 4, wobei die Bürste 2 in vertikaler Richtung leicht tiefer angeordnet ist als die Förderschnecke 3. Die Höhen der Bürste 2 und der Förderschnecke 3 sind in vertikaler Richtung vorzugsweise verstellbar. Zudem ist auch der Abstand zwischen Bürste und Förderschnecke 3 und somit die Breite des Führungsspaltes 4 in einer vorteilhaften Ausführungsform verstellbar, um die Form des Führungsspaltes 4 entsprechend der Grösse der zu reinigenden Eier einzustellen und anzupassen. Die Bürste 2 und die Förderschnecke 3 sind derart beanstandet angeordnet, dass sich ein gegen unten verjüngenden Führungsspalt 4 ausbildet, der ein sich darin befindliches Ei auffängt, sodass das Ei gegen unten gehalten ist, und somit nicht durch den Führungsspalt 4 fallen kann.

Die Förderschnecke 3 und die Bürste 2 können derart gegenseitig beabstandet angeordnet sein, dass sich die Langborsten 3g der Förderschnecke3 und die gegenüberliegend angeordneten Bürstenborsten 2b der Bürste 2 gegenseitig nicht berühren. Besonders vorteilhaft sind die Förderschnecke 3 und die Bürste 2 jedoch derart beabstandet angeordnet, dass, wie in Figur 4 dargestellt, die Langborsten 3g beziehungsweise die Langborstenbüschel 3i in die Bürste 2 eingreifen, indem diese die Bürstenborsten 2b beziehungsweise die Bürstenborstenbüschel 2c zumindest berühren, und vorzugsweise 0,5 bis 2 cm, und besonders bevorzugt etwa 1 cm tief in diese eingreifen. Ein Vorteil dieser Anordnung ist, dass sich die Förderschnecke 3 und die Bürste 2 während dem Rotieren gegenseitig reinigen, sodass allfällig vorhandene Verunreinigungen zuverlässig aus den Langborsten 3g und den Bürstenborsten 2b ausgetragen werden. Die reinigenden Teile der Förderschnecke 3 und der Bürste 2 werden somit während des Betriebs kontinuierlich selbsttätig gereinigt. Somit ist auch gewährleistet, dass die sich in der Eierreinigungsvorrichtung 1 befindlichen Eier 12 nicht gegenseitig beschmutzen. So ist insbesondere auch sichergestellt, dass ein sauberes Ei, welches im Führungsspalt 4 einem vorauslaufenden sich bereits im Führungsspalt 4 befindlichen, verschmutzen Ei folgt, nicht beschmutzt wird.

Zum sicheren Führen des Eis weist die in Fig. 4 dargestellte, besonders vorteilhafte Ausführungsform, einen vergrösserten Führungsinnenraum 7 auf, indem ein erstes Abgrenzteil 5 und ein zweites Abgrenzteil 8 angeordnet sind, welche sich beide in axialer Richtung A erstrecken, und welche oberhalb des Führungsspalts 4 einen Führungsinnenraum 7 begrenzen. Das erste Abgrenzteil 5 bildet eine Seitenführung 5a, dessen Spitzen 5b zur Oberfläche zur Bürste 2 hin ausgerichtet sind. Das erste Abgrenzteil 5 kann aus seinem festen Material wie aus einem Metall bestehen, vorzugsweise jedoch aus einem elastischen Material wie Kunststoff. Besonders bevorzugt besteht das erste Abgrenzteil 5, wie in Figur 4 dargestellt, aus einer Vielzahl von Borsten oder Borstenbüscheln, welche in axialer Richtung A derart angeordnet sind, dass sich die Seitenführung 5a ausbildet. Die einzelnen Borsten bestehen vorzugsweise aus einem Kunststoff wie beispielsweise Nylon. Das zweite Abgrenzteil 8 bildet eine zweite Seitenführung 8a, und umfasst vorteilhafterweisen zur Förderschnecke 3 hin ausgerichtete Begrenzungsteile 8b auf.

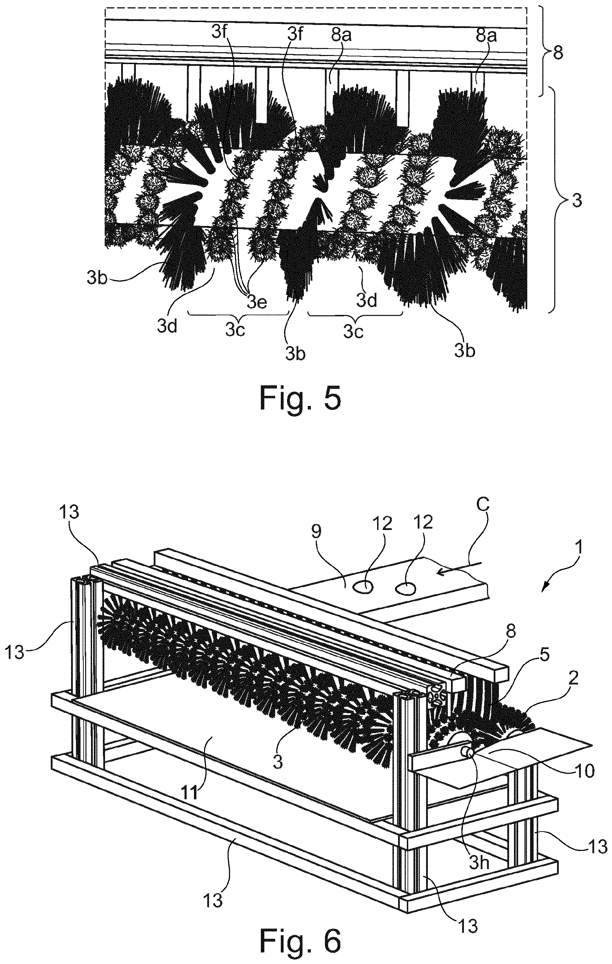

Figur 5 zeigt einen Ausschnitt der in Figur 4 dargestellten Ausführungsformen aus Blickrichtung B. Die einzelnen Begrenzungsteile 8b haben die Aufgabe zu verhindern, dass sich das im Zwischenraum 3d befindliche Ei über den höchsten Punkt der Förderschnecke 3 hinaus bewegt, und auf der anderen Seite herunterfällt. In einer vorteilhaften Ausgestaltung sind die Begrenzungsteile 8b, wie in Figur 5 dargestellt, stabförmig ausgestaltet, vorzugsweise derart, dass diese in den Zwischenraum 3d eingreifen, jedoch nicht mit den Kurzborsten 3e in Berührung kommen. Während dem rotieren der Förderschnecke 3 bewegen sich entsprechende Teile des Schneckengewinnes 3b immer wieder durch die Begrenzungsteile 3b hindurch, wobei die Langborsten 3G derart ausgestaltet sind, dass weder diese noch die Begrenzungsteile 8b beim Durchtritt Schaden nehmen. Die Begrenzungsteile 8b könnten auch elastisch ausgestaltet sein, und könnten insbesondere auch als einzelne Borsten oder Bündeln bestehend aus einzelnen Borsten ausgestaltet sein. Das erste Abgrenzungsteil 5 sowie das zweite Abgrenzungsteil 8 bilden, wie in Fig. 4 dargestellt, einen Führungsinnenraum 7, in welchem sich darin befindliche Eier in axialer Richtung A sicher geführt sind. Die Abgrenzungsteile 5,8 umfassen vorzugsweise feste Träger 5d, 8c welche in vertikaler Richtung derart beanstandet bezüglich dem Führungsspalt 4 angeordnet sind, dass die sich im Führungsinnenraum 7 befindlichen Eier die festen Träger 5d, 8c nicht berühren.

Fig. 6 zeigt in einer perspektivischen Ansicht ein weiteres Ausführungsbeispiel einer Eierreinigungsvorrichtung 1. Diese Eierreinigungsvorrichtung 1 umfasst, wie bereits in Figur 4 dargestellt, die Bürste 2, die Förderschnecke 3, das erste Abgrenzteil 5 sowie das zweite Abgrenzteil 8. Zudem umfasst die Eierreinigungsvorrichtung 1 ein Gestell 13. Die Eierreinigungsvorrichtung 1 umfasst einen Einlassbereich 9a, bei welchem Eier zugeführt werden, vorzugsweise mit einem Förderband 9, auf welchem die Eier liegen und, wie in Fig. 4 dargestellt, in Förderrichtung C zugeführt werden. Die Eierreinigungsvorrichtung 1 umfasst zudem einen Auslass 10, bei welchem die gereinigten Eier die Eierreinigungsvorrichtung 1 verlassen. Die Eierreinigungsvorrichtung 1 umfasst zudem vorteilhafterweise einen Schmutzfänger 11, beispielsweise ausgestaltet als ein Blech, das die von der Oberfläche der Eier entfernten Verschmutzungen auffängt.

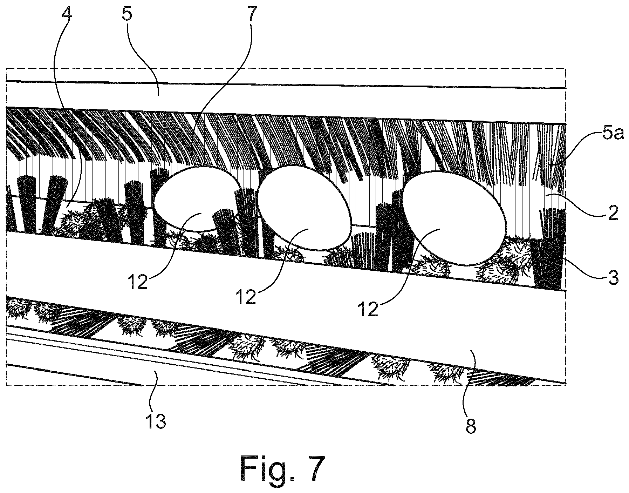

Während des Betriebs der Eierreinigungsvorrichtung 1 werden die Bürste 2 und die Förderschnecke 3 vorteilhafter Weise in derselben Richtung drehend rotiert, wobei die Bürste 2 vorzugsweise schneller rotiert als die Förderschnecke 3, beispielsweise um einen Faktor 5 bis 10 schneller. In einer vorteilhaften Ausgestaltung ist die Seitenführung 5a derart ausgestaltet, dass die Eier, wie in Fig. 6 dargestellt, über die Eierzuführung 9 von hinten zugeführt werden, sich durch die Seitenführung 5a hindurchbewegen, und sich anschliessend im Führungsinnenraum 7 befinden. Fig. 7 zeigt eine Draufsicht auf den Führungsinnenraum 7 unmittelbar nach dem Durchtritt der Eier 12 durch die Seitenführung 5a. Im dargestellten Ausführungsbeispiel besteht die Seitenführung 5a ausschliesslich aus Borsten, die derart angeordnet, und derart elastisch ausgestaltet sind, dass sein Ei problemlos durch diese Borsten hindurch bewegt werden kann. Die sich nun im Führungsraum 7 befindlichen Eier 12 werden durch die rotierende Bürste 2, und/oder doch die Kurzborsten 3e, und/oder die Langborsten 3g der rotierenden Förderschnecke in Rotation versetzt und zudem in axialer Richtung A zum Auslass 10 hin bewegt, wobei die Borsten reibend und/oder scheuernd auf die Eieroberfläche einwirken und diese reinigen. In einer vorteilhaften Ausgestaltung weisen zumindest einige der Borsten oder zumindest die Spitze einiger der Borsten abrasive Eigenschaften auf, um eine besonders stark reinigende Wirkung zu erzielen. In einer vorteilhaften Ausgestaltung sind zumindest die Spitzen der Borsten der Bürste und/oder der Kurzborsten mit abrasiven Partikeln beziehungsweise mit Schleifpartikeln versehen.

Es kann vorkommen, dass die Eierzuführung 9 zumindest zwei in axialer Richtung A unmittelbar nebeneinander liegende Eier 12 dem Führungsinnenraum 7 zuführt. Dies kann zur Folge haben, dass sich, unmittelbar nach dem Eintritt der beiden Eier 12 in den Führungsinnenraum 7, zwei Eier 12 in demselben Zwischenraum 3d befinden. Damit sich nur ein einziges Ei 12 in jeweils einem Zwischenraum 3d befindet ist es vorteilhaft die Langborsten 3g derart dicht anzuordnen beziehungsweise derart flexibel auszugestalten, dass ein Ei 12, bei einer im Wesentlichen in axialer Richtung A einwirkenden Kraft, vom Zwischenraum 3d durch das Schneckengewinde 3b beziehungsweise die Langborsten 3g hindurch zum nächstfolgenden Zwischenraum 3d geschoben wird, sodass sich nur noch je ein Ei im jeweiligen Zwischenraum 3d befinden. Sollte sich in diesem nächstfolgenden Zwischenraum 3d bereits ein Ei befinden, so entsteht eine Kettenreaktion, indem eines der beiden sich im nächstfolgenden Zwischenraum 3d befindlichen Eier 12 wiederum durch das Schneckengewinde 3b beziehungsweise die Langborsten 3g hindurch geschoben wird, und diese Kettenreaktion fortgesetzt wird, bis sich in jedem Zwischenraum 3d nur noch ein einziges Ei 12 befindet.

## Patentansprüche

1. Eierreinigungsvorrichtung (1) umfassend eine rotierbare Bürste (2) sowie eine rotierbare Förderschnecke (3) mit einer Förderschneckenwelle (3a) und einem Schneckengewinde (3b), wobei die Bürste (2) und die Förderschnecke (3) in einer axialen Richtung (A) im Wesentlichen horizontal und gegenseitig parallel verlaufend angeordnet sind, wobei das Schneckengewinde (3b), bedingt durch dessen Steigung (3c), in axialer Richtung (A) einen ein Ei aufnehmenden Zwischenraum (3d) ausbildet, **dadurch gekennzeichnet, dass** die Bürste (2) und die Förderschneckenwelle (3a) einen sich nach unten verjüngenden, das Ei auffangenden Führungsspalt (4) ausbilden.

2. Eierreinigungsvorrichtung nach Anspruch 1, **dadurch gekennzeichnet, dass** das Schneckengewinde (3b) aus Langborsten (3g) besteht.

3. Eierreinigungsvorrichtung nach Anspruch 2, **dadurch gekennzeichnet, dass** die Langborsten (3g) derart dicht angeordnet sind, dass ein Ei, bei einer im Wesentlichen in axialer Richtung (A) einwirkenden Kraft, vom Zwischenraum (3d) durch das Schneckengewinde (3b) hindurch zum nächstfolgenden Zwischenraum (3d) bewegbar ist.

4. Eierreinigungsvorrichtung nach einem der vorhergehenden Ansprüche, **dadurch gekennzeichnet, dass** die Förderschneckenwelle (3a) im Bereich des Zwischenraums (3d) vorstehende Kurzborsten (3e) aufweist.

5. Eierreinigungsvorrichtung nach Anspruch 4, **dadurch gekennzeichnet, dass** die Kurzborsten (3e) eine Borstenlinie (3f) ausbilden, und dass die Borstenlinie (3f) schneckenförmig und parallel zum Schneckengewinde (3b) verläuft.

6. Eierreinigungsvorrichtung nach Anspruch 5, **dadurch gekennzeichnet, dass** im Zwischenraum (3d) zumindest zwei Borstenlinien (3f) angeordnet sind, wobei die Borstenlinien (3f) in axialer Richtung (A) gegenseitig und auch bezüglich dem Schneckengewinde (3b) beabstandet sind.

7. Eierreinigungsvorrichtung nach einem der vorhergehenden Ansprüche, **dadurch gekennzeichnet, dass** über der Bürste (2) ein in axialer Richtung (A) verlaufendes, zur Bürste (2) hin ausgerichtetes erstes Abgrenzteil (5) angeordnet ist, welches gegen oben, anschliessend an den Führungsspalt (4), eine erste Seitenführung (5a) eines erweiterten Führungsinnenraumes (7) ausbildet.

8. Eierreinigungsvorrichtung nach Anspruch 7, **dadurch gekennzeichnet, dass** das erste Abgrenzteil (5) eine Vielzahl von Abgrenzborsten (5c) umfasst, welche die erste Seitenführung (5a) ausbilden.

9. Eierreinigungsvorrichtung nach einem der vorhergehenden Ansprüche 7 bis 8, **dadurch gekennzeichnet, dass** über der Förderschnecke (3) ein in axialer Richtung (A) verlaufendes, zur Förderschnecke (3) hin ausgerichtetes zweites Abgrenzteil (8) angeordnet ist, welches eine zweite Seitenführung (8a) des erweiterten Führungsinnenraumes (7) ausbildet.

10. Eierreinigungsvorrichtung nach Anspruch 9, **dadurch gekennzeichnet, dass** das zweite Abgrenzteil (8) von oben in den Zwischenraum (3d) der Förderschnecke (3) vorsteht.

11. Eierreinigungsvorrichtung nach Anspruch 10, **dadurch gekennzeichnet, dass** das zweite Abgrenzteil (8) stabförmig ausgestaltete Begrenzungsteile (8b) umfasst, welche in den Zwischenraum (3d) der Förderschnecke (3) vorstehen.

12. Eierreinigungsvorrichtung nach einem der vorhergehenden Ansprüche, **dadurch gekennzeichnet, dass** die Bürste (2) eine Drehachse (2a) aufweist, dass die Förderschnecke (3) eine Drehachse (3h) aufweist, und dass die Drehachse (3h) der Förderschnecke (3) in vertikaler Richtung höher angeordnet ist als die Drehachse (2a) der Bürste (2).

13. Eierreinigungsvorrichtung nach einem der vorhergehenden Ansprüche, **dadurch gekennzeichnet dass** zumindest die Spitze der Bürste (2) abrasive Eigenschaften aufweist.

14. Verfahren zum Reinigen der Oberfläche einer Mehrzahl von Eiern (12) mit einer rotierenden Bürste (2) und mit einer rotierenden Förderschnecke (3), wobei die Förderschnecke (3) ein Schneckengewinde (3b) bestehend aus Langborsten (3g) aufweist, und wobei die Bürste (2) und die Förderschnecke (3) in einer axialen Richtung (A), unter Ausbildung eines Führungsspaltes (4), im Wesentlichen horizontal und gegenseitig parallel verlaufen, indem die Eier (12) durch die Langborsten (3g) in axialer Richtung (A) entlang der rotierenden Bürste (2) verschoben werden, wobei durch das Schneckengewinde (3b) in axialer Richtung (A) eine Mehrzahl von Zwischenräumen (3d) ausgebildet wird, und wobei in jedem Zwischenraum (3d) höchstens ein einziges Ei (12) gefördert wird.

15. Verfahren nach Anspruch 14, **dadurch gekennzeichnet, dass**, falls sich zwei Eier (12) gleichzeitig in einem Zwischenraum (3d) befindet, ein Ei (12) in axialer Richtung (A) durch das Schneckengewinde (3b) hindurch zum in axialer Richtung (A) anschliessenden Zwischenraum bewegt wird, sodass in jedem Zwischenraum (3d) höchstens ein einziges Ei (12) gefördert wird
